(19) 

Europäisches Patentamt

European Patent Office

Office européen des brevets

(11) **EP 4 712 287 A1**

(12) **EUROPEAN PATENT APPLICATION**
published in accordance with Art. 153(4) EPC

(43) Date of publication:
**18.03.2026 Bulletin 2026/12**

(21) Application number: **23936198.3**

(22) Date of filing: **18.05.2023**

(51) International Patent Classification (IPC):
***H02J 3/16*** (2026.01)          ***H02J 3/00*** (2026.01)

(52) Cooperative Patent Classification (CPC):
Y02E 10/56

(86) International application number:
**PCT/CN2023/094936**

(87) International publication number:
**WO 2024/229885 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.05.2023 CN 202310519047**

(71) Applicant: **Sungrow Power Supply Co., Ltd.**
**Hefei, Anhui 230088 (CN)**

(72) Inventors:
• **PAN, Nianan**
  **Hefei, Anhui 230088 (CN)**
• **ZHANG, Xianli**
  **Hefei, Anhui 230088 (CN)**

(74) Representative: **Prinz & Partner mbB**
**Patent- und Rechtsanwälte**
**Rundfunkplatz 2**
**80335 München (DE)**

(54) **GRID-CONNECTED INVERTER AND OVERVOLTAGE SUPPRESSION METHOD THEREFOR**

(57)     Provided in the present application are a grid-connected inverter and an overvoltage suppression method therefor. In the overvoltage suppression method, when an alternating-current port voltage of a grid-connected inverter does not exceed a preset threshold value, the grid-connected inverter is controlled to perform grid-connected operation in a current source mode; when the alternating-current port voltage exceeds the preset threshold value, the grid-connected inverter is controlled to perform grid-connected operation in a voltage source mode, such that a response to a reactive current or reactive power, which is outputted by an alternating-current port of the grid-connected inverter, is realized within a preset duration; and the grid-connected inverter is controlled to resume the current source mode until the reactive current or the reactive power is greater than or equal to a corresponding preset reactive instruction value. Therefore, when a temporary overvoltage occurs in an electric power system, transient voltage source characteristics are constructed, and a power supply characteristic of a grid-connected inverter is used to enable the grid-connected inverter to perform spontaneous reactive injection, so as to greatly reduce a reactive response time so that same is synchronous with a rising speed of an alternating-current port voltage, that is, an instantaneous reactive power support can be achieved, and rapid suppression of an instantaneous overvoltage can thus be achieved.

FIG. 1

## Description

This application claims the priority to Chinese Patent Application No. 202310519047.8, titled "GRID-CONNECTED INVERTER AND OVERVOLTAGE SUPPRESSION METHOD THEREFOR", filed on May 09, 2023, with the China National Intellectual Property Administration, which is incorporated herein by reference in its entirety.

## FIELD

The present disclosure relates to the technical field of power electronics, and in particular to a grid-connected converter and an overvoltage suppression method for the grid-connected converter.

## BACKGROUND

In recent years, the proportion of renewable energy power generation, represented by wind power generation and photovoltaic power generation, in China's power generation capacity has been increasing year by year. Meanwhile, since large-scale energy bases and load centers are distributed oppositely in China, multiple large-capacity, cross-regional ultra-high-voltage alternating-current and direct-current long-distance power transmission projects are constructed. Due to the increased proportion of renewable energy power generation, strength of power grids is generally low. When an alternating-current fault or direct-current fault occurs in a renewable energy power generation system, instantaneous excess reactive power may cause a transient overvoltage in an alternating-current system connected to a sending end of the renewable energy power generation system, and the overvoltage has severely affected the transmission stability and safety of a power system.

At present, most renewable energy power generation inverters are connected to the power grid in a current-source mode. When a transient overvoltage occurs in a power system, inductive reactive power is typically injected into the inverter through a current-loop response to suppress the transient overvoltage. However, in practice, since reactive current response time of the inverter is constrained by time for detection and current-loop control, it is difficult to satisfy a reactive power demand of the transient overvoltage. When a response time lag is great, a substantial voltage fluctuation in the power system may be caused, thereby affecting the safety of the power system.

## SUMMARY

A grid-connected inverter and an overvoltage suppression method for the grid-connected inverter are provided according to the present disclosure, to improve a response speed for a transient overvoltage.

To achieve the foregoing objective, the following technical solutions are provided according to the present disclosure.

An overvoltage suppression method for a grid-connected inverter is provided according to a first aspect of the present disclosure, and the method includes:

> determining whether a voltage at an alternating-current port of the grid-connected inverter exceeds a preset threshold;

> controlling, in a case that the voltage at the alternating-current port does not exceed the preset threshold, the grid-connected inverter to operate in a current-source mode when being connected to a power grid;

> in a case that the voltage at the alternating-current port exceeds the preset threshold, controlling the grid-connected inverter to operate in a voltage-source mode when being connected to the power grid, to enable a reactive current or reactive power outputted from the alternating-current port of the grid-connected inverter to respond within a preset duration; and switching, when the reactive current is greater than or equal to a preset reactive current or when the reactive power is greater than or equal to a preset reactive power, the grid-connected inverter from the voltage-source mode to the current-source mode.

In an embodiment, the controlling the grid-connected inverter to operate in the current-source mode when being connected to the power grid includes:
controlling the grid-connected inverter to operate normally in a current-loop control mode.

In an embodiment, the controlling the grid-connected inverter to operate in the voltage-source mode when being connected to the power grid includes:
limiting a magnitude of a modulation voltage of the grid-connected inverter in the current-loop control mode.

In an embodiment, a limited magnitude of the modulation voltage is calculated based on the preset reactive current.

In an embodiment, the switching the grid-connected inverter from the voltage-source mode to the current-source mode includes:
gradually releasing the limit on the magnitude of the modulation voltage.

In an embodiment, before controlling the grid-connected inverter to operate in the current-source mode or the voltage-source mode when being connected to the power grid, the overvoltage suppression method further includes:
determining the modulation voltage of the grid-connected inverter in the current-loop control mode based on acquired information of the grid-connected inverter.

In an embodiment, the acquired information includes a direct-current voltage, alternating-current currents, and alternating-current voltages acquired from the grid-connected inverter.

In an embodiment, the preset threshold is an upper limit of an allowable range of the voltage at the alternating-current port of the grid-connected inverter under a national standard requirement.

In an embodiment, the preset threshold is 1.1 times a rated voltage at the alternating-current port of the grid-connected inverter.

In an embodiment, the preset reactive current corresponding to the reactive current outputted from the alternating-current port of the grid-connected inverter is calculated according to a national standard requirement, where a frequency of the voltage at the alternating-current port of the grid-connected inverter is within a safe frequency range for the power grid.

In an embodiment, the preset reactive current corresponding to the reactive current outputted from the alternating-current port of the grid-connected inverter is a product of a difference and a reactive power compensation factor, and the difference is obtained by the preset threshold minus the voltage at the alternating-current port of the grid-connected inverter.

A grid-connected inverter is provided according to a second aspect of the present disclosure, and the grid-connected inverter includes an inverter circuit and a controller; where

an alternating-current side of the inverter circuit is connected to a power grid through a filter;

the inverter circuit is controlled by the controller; and

the controller is configured to perform the overvoltage suppression method for the grid-connected inverter according to any one of the embodiments described in the first aspect.

In an embodiment, the controller includes a processor and a pulse width modulation (PWM) control unit, where
the processor is configured to perform the overvoltage suppression method and control the inverter circuit through the PWM control unit.

In an embodiment, the processor includes a processing unit, a modulation voltage magnitude limiting unit, and a current-loop control unit, where

the current-loop control unit is configured to determine a modulation voltage of the grid-connected inverter based on acquired information of the grid-connected inverter; and

the processing unit is configured to determine whether the voltage at the alternating-current port of the grid-connected inverter exceeds a preset threshold, and control the modulation voltage magnitude limiting unit to limit a magnitude of the modulation voltage of the grid-connected inverter.

In the overvoltage suppression method for the grid-connected inverter is provided according to the present disclosure, whether the voltage at the alternating-current port of the grid-connected inverter exceeds the preset threshold is determined. In a case that the voltage at the alternating-current port does not exceed the preset threshold, the grid-connected inverter is controlled to operate in the current-source mode when being connected to the power grid. However, in a case that the voltage at the alternating-current port exceeds the preset threshold, the grid-connected inverter is controlled to operate in the voltage-source mode when being connected to the power grid, to enable the reactive current or the reactive power outputted from the alternating-current port of the grid-connected inverter to respond within the preset duration, and the grid-connected inverter is switched from the voltage-source mode to the current-source mode when the reactive current is greater than or equal to the preset reactive current, or when the reactive power is greater than or equal to a preset reactive power. Thereby, when the transient overvoltage occurs in the power system, a transient voltage source characteristic is constructed, to achieve spontaneous reactive power injection by using a power supply characteristic of the grid-connected inverter, significantly reducing reactive power response time, so that the reactive power response time can be synchronized with a rising speed of the voltage at the alternating-current port, that is, instantaneous reactive power support can be achieved, thus rapidly suppressing the transient overvoltage.

**BRIEF DESCRIPTION OF THE DRAWINGS**

Hereinafter drawings to be applied in embodiments of the present disclosure or in conventional technology are briefly described, in order to clarify illustration of technical solutions according to embodiments of the present disclosure or in conventional technology. Apparently, the drawings in the following descriptions are only some embodiments of the present disclosure, and other drawings may be obtained by those skilled in the art based on the provided drawings without exerting creative efforts.

FIG. 1 is a flowchart of an overvoltage suppression method for a grid-connected inverter according to an embodiment of the present disclosure;

FIG. 2 is an equivalent circuit diagram between a grid-connected inverter and a power grid according to an embodiment of the present disclosure;

FIG. 3 is a flowchart of an overvoltage suppression method for a grid-connected inverter according to another embodiment of the present disclosure;

FIG. 4 is a diagram of a practical effect of an overvoltage suppression method for a grid-connected inverter according to an embodiment of the present disclosure;

FIG. 5 is a schematic structural diagram of a grid-connected inverter according to an embodiment of the present disclosure; and

FIG. 6 is a specific schematic structural diagram of a grid-connected inverter according to an embodiment of the present disclosure.

## DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. All other embodiments obtained by those skilled in the art based on the embodiments in the present disclosure without any creative work fall within the protection scope of the present disclosure.

The terms "include", "comprise" or any other variants thereof are intended to be nonexclusive. Therefore, a process, method, article or device including a series of elements include not only these elements but also other elements that are not clearly enumerated, or further include elements inherent in the process, method, article or device. Unless expressly limited otherwise, the phrase "comprising (including) a/an..." does not exclude existence of other similar elements in the process, method, article or device including the elements.

A grid-connected inverter for renewable energy power generation is connected to a power grid in a current-source mode, with generally a given current

$$i_q^* = 0$$

for reactive power compensation. According to a requirement of a power grid standard, when a transient overvoltage occurs in a power system, inductive reactive power is injected into the grid-connected inverter to suppress the overvoltage. In an embodiment, when a voltage (specifically a magnitude $U_g$) at an alternating-current port of the inverter exceeds a threshold $U_{th}$, a given current $i_q^*$ for the reactive power compensation is calculated by using the following equation:

$$i_q^* = (U_{th} - U_g) * K_f;$$

where $K_f$ represents a reactive power compensation factor, depending on a relevant national standard. For example, under a national standard requirement of China, the factor is taken as 1.5. In practical applications, under a national standard requirement of another country, the factor may be taken as 2 or 6. The factor is not limited herein and determined based on a specific application environment.

When a transient overvoltage occurs, a required reactive current is injected into the grid-connected inverter after at least 10ms due to a lag in current control. However, by this time, a device may be damaged or shut down by the transient overvoltage.

Therefore, an overvoltage suppression method for a grid-connected inverter is provided according to the present disclosure to improve a response speed for a transient overvoltage.

The grid-connected inverter may be an inverter connected to a power grid or an inverter connected to a microgrid, provided that the grid-connected inverter has a grid connection function, which is not limited herein.

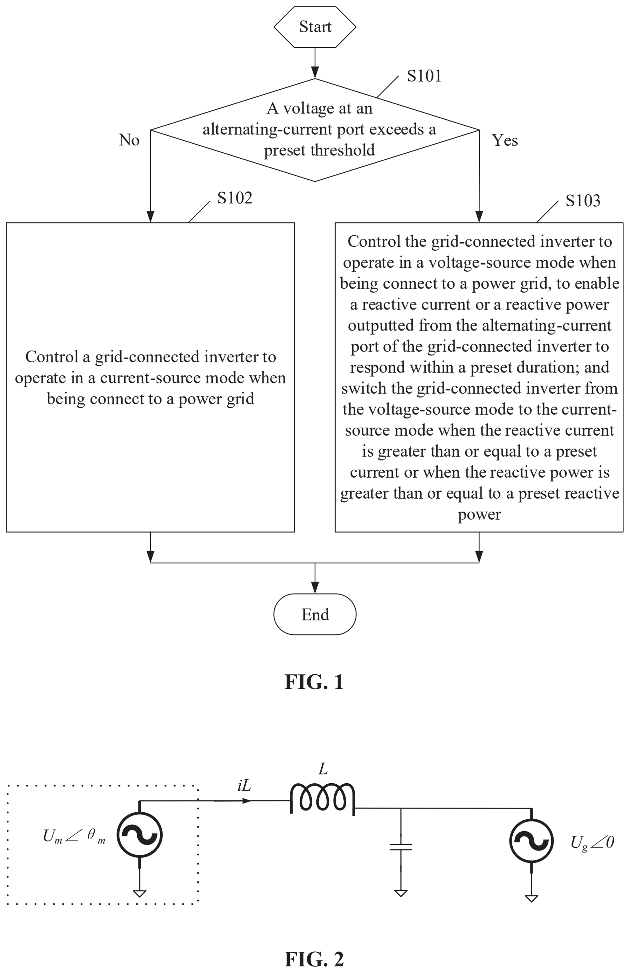

Referring to FIG. 1, an overvoltage suppression method for the grid-connected inverter includes steps S101 to S103.

In step S101, whether a voltage at an alternating-current port of the grid-connected inverter exceeds a preset threshold is determined.

The voltage at the alternating-current port refers to a voltage acquired at an alternating-current port of the grid-connected inverter, that is, a voltage outside a filter of the grid-connected inverter, or a voltage at a grid connection point connected to the grid-connected inverter, or a voltage at a low-voltage side of a grid-connected boosting transformer of the grid-connected inverter.

In practical applications, the preset threshold $U_{th}$ is an upper limit of an allowable range of the voltage at the alternating-current port of the grid-connected inverter under a national standard requirement. For example, the preset threshold may be set to 1.1 times a rated voltage $U_n$ at the alternating-current port of the grid-connected inverter, and is not limited thereto, as long as exceeding the preset threshold can indicate a voltage surge, that is, a transient overvoltage, occurring at the alternating-current port of the grid-connected inverter. The preset threshold is determined based on a specific application environment. All implementations fall within the protection scope of the present disclosure.

If the voltage at the alternating-current port does not exceed the preset threshold, step S102 is performed. If the voltage at the alternating-current port exceeds the preset threshold, step S103 is performed.

In step S102, the grid-connected inverter is controlled to operate in a current-source mode when being connected to the power grid.

Furthermore, if the voltage at the alternating-current port does not exceed the preset threshold, it is indicates no transient overvoltage occurring in the power system. Then, the grid-connected inverter is operating in the current-source mode under a normal condition, with a given current $i_q^* = 0$ for reactive power compensation.

In step S103, the grid-connected inverter is controlled to operate in a voltage-source mode when being connected to the power grid, to enable a reactive current or a reactive power outputted from the alternating-current port of the grid-connected inverter to respond within a preset duration. When the reactive current or the reactive power outputted from the alternating-current port of the grid-connected inverter is greater than or equal to a preset reactive current or a preset reactive power, the grid-connected inverter is switched from the voltage-source mode to the current-source mode.

That is, when a transient overvoltage occurs in the power system, different from a solution of changing a given current $i_q^*$ for reactive power compensation in a current-source mode in the related art, the grid-connected inverter operates in a voltage-source mode when being connected to the power grid in the embodiment, a transient voltage source characteristic is constructed for the grid-connected inverter, to achieve spontaneous reactive power injection by using a power supply characteristic, which is similar to a principle that a synchronous generator spontaneously generates a reactive current through an internal electric potential, to cause a reactive current or reactive power outputted from the alternating-current port of the grid-connected inverter to respond within the preset duration. The preset duration may be determined based on an actual application environment, and is at least less than 10ms, as long as a rapid reactive power response can be achieved.

Furthermore, when the reactive current outputted from the alternating-current port of the grid-connected inverter is greater than or equal to the preset reactive current (that is, the given current $i_q^*$ for reactive power compensation described above), or when the reactive power outputted from the alternating-current port of the grid-connected inverter is greater than or equal to the preset reactive power, the grid-connected inverter may be controlled to resume the current-source mode under a normal condition. In practical applications, the preset reactive current, that is, the given current $i_q^*$ for reactive power compensation, corresponding to the reactive current outputted from the alternating-current port of the grid-connected inverter, is calculated according to a national standard requirement to maintain a frequency of the voltage at the alternating-current port of the grid-connected inverter within a safe frequency range for the power grid. In an embodiment, the preset reactive current is a product of a difference and the reactive power compensation factor $K_f$, and the difference is obtained by the preset threshold minus the voltage at the alternating-current port. The preset reactive current is the given current $i_q^*$ for reactive power compensation calculated as

$$i_q^* = \left( U_{th} - U_g \right) * K_f$$

when the transient overvoltage occurs in the power system in the related art.

In the overvoltage suppression method for the grid-connected inverter according to the embodiment, based on the above-described principle, when the transient overvoltage occurs in the power system, the transient voltage source characteristic is constructed, to achieve spontaneous reactive power injection by using a power supply characteristic of the grid-connected inverter, significantly reducing reactive power response time, so that the reactive power response time can be synchronized with a rising speed of the voltage at the alternating-current port, that is, instantaneous reactive power support can be achieved, thus rapidly suppressing the transient overvoltage.

Based on the previous embodiment, in the embodiment, the grid-connection mode of the grid-connected inverter is described in detail. For instance, in step S102 in FIG. 1, controlling the grid-connected inverter to operate in the current-source mode when being connected to the power grid includes: controlling the grid-connected inverter to operate normally in a current-loop control mode.

When the grid-connected inverter operates normally in the current-loop control mode, an active power and a reactive power are controlled through a current-loop control. When a voltage of the power grid suddenly increases, the voltage at the alternating-current port of the grid-connected inverter exceeds the preset threshold. In the present disclosure, through a reactive power generation principle in a voltage-source mode, inductive reactive power is injected as soon as possible. In an embodiment, as shown in FIG. 2, a modulation voltage of the grid-connected inverter, that is, a voltage of an end of an inverter circuit in the grid-connected inverter connected to a filter is $U_m \angle \theta_m$; the voltage at the alternating-current port on a power grid side of the grid-connected inverter is $U_g \angle 0$; the filter $L$ of the grid-connected inverter corresponds to a fundamental impedance $X_L = 2\pi f_0 * L$. $U_m$ represents a magnitude of the modulation voltage of an output vector, and $\theta_m$ represents a phase of the modulation voltage of an output vector; $U_g$ represents a magnitude of the voltage at the alternating-current port; $f_0$ represents a fundamental frequency, typically $f_0$ is taken as 50Hz or 60Hz; and $iL$ represents a current flowing through the filter $L$ of the grid-connected inverter. In this case, a calculation equation for the reactive power $Q_e$ outputted from the grid-connected inverter is expressed as follows:

$$Q_e = \frac{U_m(U_m - U_g\cos\theta_m)}{X_L}$$

From the above equation, it may be seen that the reactive power $Q_e$ outputted from the grid-connected inverter can be directly controlled by regulating the magnitude $U_m$ of the modulation voltage. Therefore, in step S103 in the above embodiment, controlling the grid-connected inverter to operate in the voltage-source mode when being connected to the power grid includes: limiting the magnitude of the modulation voltage of the grid-connected inverter in the current-loop control mode. That is, during a surge in the voltage of the power grid, the magnitude $U_m$ of the modulation voltage is rapidly limited, achieving a rapid reactive power control function.

Furthermore, when the magnitude of the modulation voltage is limited, the limited magnitude is calculated based on the preset reactive current. The process may vary depending on actual application environments and is not limited herein. The preset reactive current is the given current $i_q^*$ for reactive power compensation that is calculated according to

$$i_q^* = \left(U_{th} - U_g\right) * K_f$$ in the related art.

Therefore, in this step, the magnitude $U_m$ of the modulation voltage is regulated based on the voltage at the alternating-current port or the voltage of the power grid after voltage boosting, thereby enabling the grid-connected inverter to exhibit a voltage regulation characteristic.

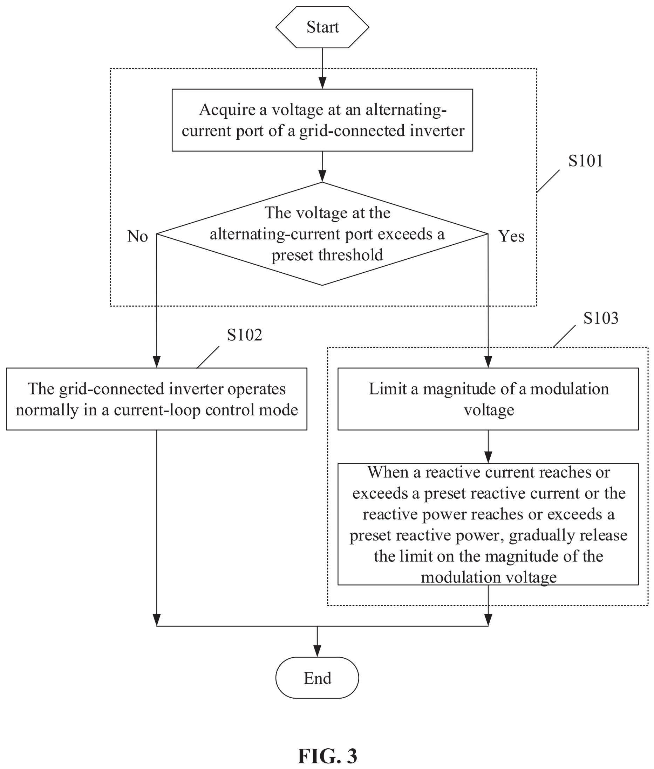

The overvoltage suppression method is completely illustrated in FIG. 3. First, the voltage at the alternating-current port of the grid-connected inverter is acquired, and then whether the magnitude $U_g$ of the voltage exceeds the preset threshold $U_{th}$ is determined. In a case that the magnitude $U_g$ of the voltage at the alternating-current port does not exceed the preset threshold $U_{th}$, the grid-connected inverter operates normally in the current-loop control mode. In a case that the magnitude $U_g$ of the voltage at the alternating-current port exceeds the preset threshold $U_{th}$, the magnitude $U_m$ of the modulation voltage is limited, where the regulating principle includes calculating a limited magnitude based on the preset reactive current corresponding to the reactive current. Additionally, when the reactive current outputted from the alternating-current port of the grid-connected inverter reaches or exceeds the preset reactive current, or when the reactive power reaches or exceeds the preset reactive power, the limit on the magnitude of the modulation voltage may be gradually canceled, that is, the limit on the magnitude of the modulation voltage is gradually released, and the operation of the grid-connected inverter is switched to the normal current-loop control mode, thus controlling the reactive current to be the preset reactive current.

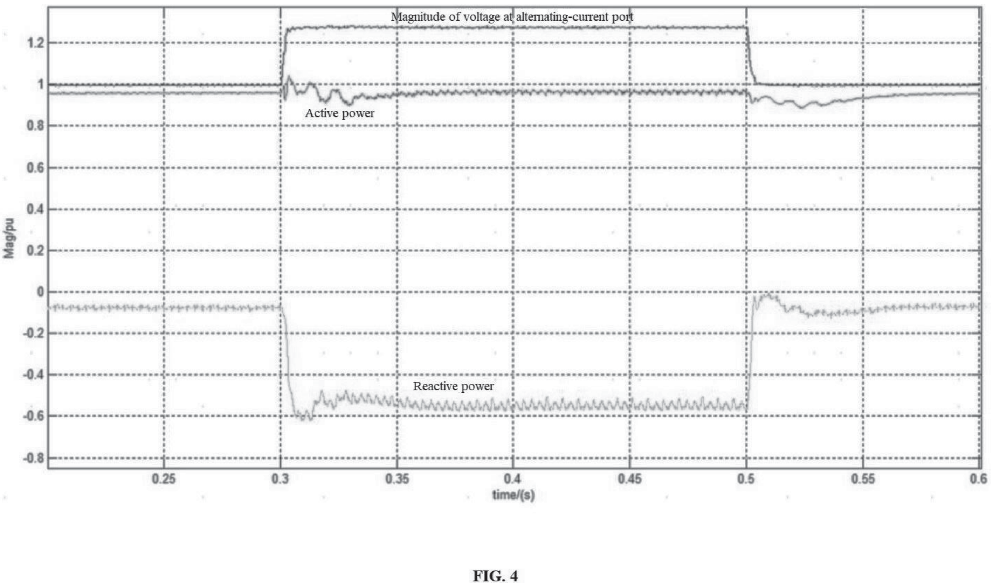

An actual implementation effect of this method is shown in FIG. 4. At the moment when the voltage at the alternating-current port of the grid-connected inverter suddenly increases, reactive power is rapidly injected into the grid-connected inverter by constructing a transient voltage source mode. Once the reactive current outputted from the alternating-current port of the grid-connected inverter reaches the preset reactive current, the voltage-source mode is gradually canceled, and is switched back to the current-source mode, maintaining stable injection of the reactive power.

Based on the above embodiment, in an embodiment, the overvoltage suppression method for the grid-connected inverter further includes, prior to S102 or S103: determining the modulation voltage of the grid-connected inverter in the current-loop control mode based on acquired information of the grid-connected inverter.

In an embodiment, the acquired information includes a direct-current voltage $Udc$, alternating-current currents $Iabc$, and alternating-current voltages $Uabc$ acquired from the grid-connected inverter.

In practical applications, prior to step S101, that is, before determining whether the voltage at the alternating-current port exceeds the preset threshold, the modulation voltage of the grid-connected inverter in the current-loop control mode is first determined as $U_m \angle \theta_m$ based on the above-described acquired information through internal software of a controller in the grid-connected inverter. Then, in step S101, whether the voltage at the alternating-current port exceeds the preset threshold is determined. In a case that the voltage at the alternating-current port does not exceed the preset threshold, the inverter circuit of the grid-connected inverter is controlled based on the modulation voltage $U_m \angle \theta_m$ to ensure the grid-connected inverter to operate normally in the current-loop control mode. In a case that the voltage at the alternating-current port exceeds the preset threshold, the magnitude $U_m$ of the modulation voltage $U_m \angle \theta_m$ is limited, and then the inverter circuit of the grid-connected inverter is controlled to enter the voltage source mode.

Alternatively, step S101 is performed first, then the modulation voltage is determined, and then whether to limit the magnitude of the modulation voltage is determined. The sequence of performing depends on an application environment. All implementations fall within the protection scope of the present disclosure.

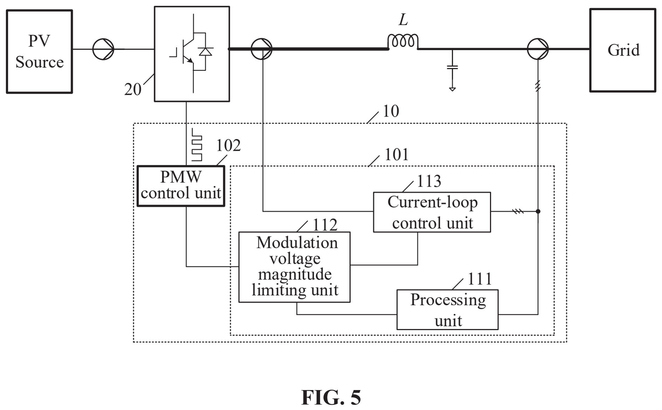

A grid-connected inverter is provided according to another embodiment of the present disclosure, as shown in FIG. 5. The grid-connected inverter includes an inverter circuit 20 and a controller 10. An alternating-current side of the inverter circuit 20 is connected to a power grid (Grid as shown in FIG. 5) or a microgrid through a filter $L$. In actual applications, the filter $L$ is connected to the power grid through a grid-connected boosting transformer (not shown in the figures). A direct-current side of the inverter circuit 20 may be directly connected to a renewable energy power generation device, such as a photovoltaic device (PV Source as shown in the figure), or may be connected to a photovoltaic device or a wind power generation device through a conversion circuit, depending on an application environment. The inverter circuit 20 is controlled by the controller 10. The controller 10 is configured to perform the overvoltage suppression method for the grid-connected inverter according to any one of the above-described embodiments.

In an embodiment, as shown in FIG. 5, the controller 10 includes a processor 101 and a PWM (Pulse Width Modulation) control unit 102. The processor 101 is configured to perform the overvoltage suppression method and control the inverter circuit 20 through the PWM control unit 102.

Referring to FIG. 5, the processor 101 includes: a processing unit 111, a modulation voltage magnitude limiting unit 112, and a current-loop control unit 113. The current-loop control unit 113 is configured to determine a modulation voltage of the grid-connected inverter based on acquired information of the grid-connected inverter; the processing unit 111 is configured to determine whether the voltage at the alternating-current port of the grid-connected inverter exceeds a preset threshold and control the modulation voltage magnitude limiting unit 112 to limit a magnitude of the modulation voltage of the grid-connected inverter.

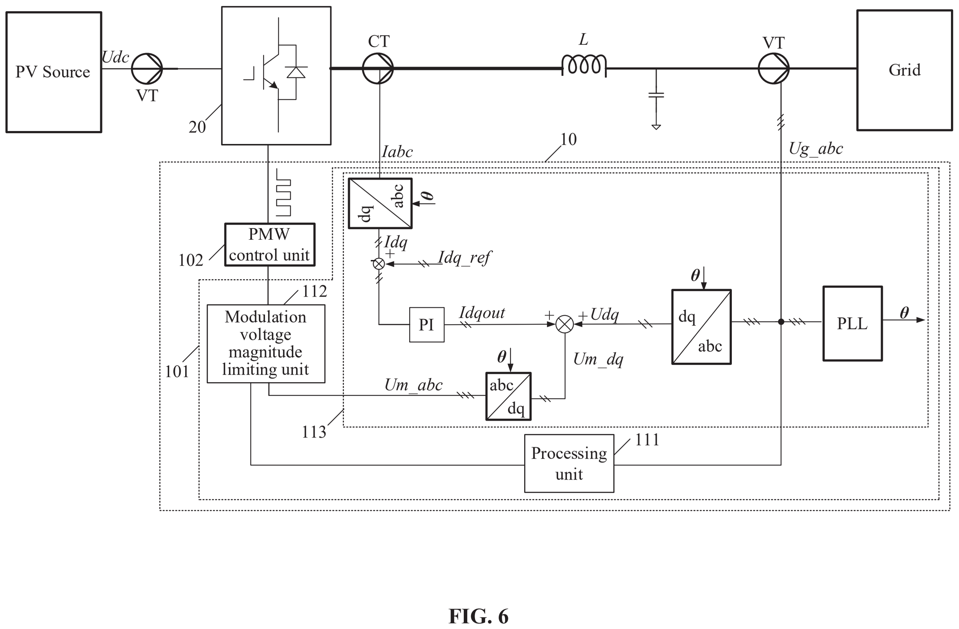

An operating principle of the current-loop control unit 113 is shown in FIG. 6. Alternating-current currents $Iabc$ of the grid-connected inverter are converted into active and reactive current feedbacks $Idq$ through $abc/dq$ conversion. Differences obtained by given active and reactive currents $Idg\_ref$ (including a given active current $i_p^*$ and the above-described given current $i_q^*$ for reactive compensation) minus the active and reactive current feedbacks $Idq$, respectively, are processed through a PI regulator to obtain regulated active and reactive currents $Idqout$. Three-phase voltages $Ug\_abc$ at the alternating-current port of the grid-connected inverter are processed through a phase-locked loop (PLL) to obtain a phase angle $\theta$ of the power grid, and are converted into active and reactive voltage feedbacks $Udq$ through the $abc/dq$ conversion. Sums $Um\_dq$ obtained by the regulated active and reactive currents Idqout plus the active and reactive voltage feedbacks $Udq$, respectively, are converted into three-phase modulation voltages $Um\_abc$ (including three-phase voltages) through the $dq/abc$ conversion. In a normal current-source mode, the modulation voltage magnitude limiting unit 112 does not operate, and the PWM control unit 102 directly generates a control signal for the inverter circuit 20 based on the three-phase modulation voltages $Um\_abc$. In a voltage source mode, the modulation voltage magnitude limiting unit 112 limits the magnitude of the three-phase modulation voltages $Um\_abc$, to output limited three-phase modulation voltages $Um\_abc$ to the PWM control unit 102, to limit a magnitude of a voltage outputted from the PWM control unit 102, as the control signal for the inverter circuit 20.

In the embodiment, in the overvoltage suppression method by a virtual voltage source control, when a transient overvoltage occurs in a power grid due to a fault, a transient voltage source characteristic is constructed by regulating the magnitude of the modulation voltage, and spontaneous reactive power injection is achieved by using a power supply characteristic, achieving instantaneous reactive power support to suppress the magnitude of the transient overvoltage. Furthermore, when the reactive current reaches a preset current, the limit on the magnitude of the voltage is gradually released, gradually transitioning to the current-loop control on the reactive current, thereby achieving an accurate reactive current control.

In the overvoltage suppression method, rapid reactive current response is achieved through a rapid reactive power regulation characteristic of a voltage source, and reactive current response time reaches a reactive power response speed under control of a VSG (virtual synchronous generator). Moreover, by means of an accurate tracking characteristic of the current-loop control, rapid reactive current support capability is achieved, and the reactive current at a stable state can be accurately compensated to the preset value.

The same or similar parts of the embodiments in the specification may be referred to each other, and each of the embodiments emphasizes differences from other embodiments. In particular, the system or the system embodiments are almost similar to the method embodiments, and therefore are described relatively briefly. For relevant details, reference may be made to the corresponding descriptions of the method embodiments. The system and system embodiments described above are only illustrative. Units described as separate components may or may not be physically separated. Components shown as units may or may not be physical units, that is, they may be located in one place or distributed over multiple network elements. Some or all of the modules may be selected as needed to achieve the objective of the solution of the embodiments. Those skilled in the art can understand and implement the solution without any creative effort.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether or not these functions are performed in hardware or software depends on the specific application and design constraints of the technical solution. Those skilled in the art may implement the described functionality in various manners for each specific application, while such implementations should not be considered to be beyond the scope of the present disclosure.

On a basis of the embodiments as illustrated above, the features in different embodiments of the present disclosure may be mutually replaced or combined, so that those skilled in the art can implement or utilize the present disclosure. Various modifications to these embodiments are obvious to those skilled in the art, and the general principles defined herein may be implemented in other embodiments without departing from the spirit and scope of the present disclosure. Therefore, the present disclosure is not to be limited to the embodiments shown herein, but is conformed to the widest scope consistent with the principles and novel features disclosed herein.

**Claims**

1. An overvoltage suppression method for a grid-connected inverter, **characterized by** comprising:

   determining whether a voltage at an alternating-current port of the grid-connected inverter exceeds a preset threshold;
   controlling, in a case that the voltage at the alternating-current port does not exceed the preset threshold, the grid-connected inverter to operate in a current-source mode when being connected to a power grid;
   in a case that the voltage at the alternating-current port exceeds the preset threshold, controlling the grid-connected inverter to operate in a voltage-source mode when being connected to the power grid, to enable a reactive current or a reactive power outputted from the alternating-current port of the grid-connected inverter to respond within a preset duration; and switching, when the reactive current is greater than or equal to a preset reactive current or when the reactive power is greater than or equal to a preset reactive power, the grid-connected inverter from the voltage-source mode to the current-source mode.

2. The overvoltage suppression method for the grid-connected inverter according to claim 1, wherein the controlling the grid-connected inverter to operate in the current-source mode when being connected to the power grid comprises:
   controlling the grid-connected inverter to operate normally in a current-loop control mode.

3. The overvoltage suppression method for the grid-connected inverter according to claim 1, wherein the controlling the grid-connected inverter to operate in the voltage-source mode when being connected to the power grid comprises:
limiting a magnitude of a modulation voltage of the grid-connected inverter in the current-loop control mode.

4. The overvoltage suppression method for the grid-connected inverter according to claim 3, wherein a limited magnitude of the modulation voltage is calculated based on the preset reactive current.

5. The overvoltage suppression method for the grid-connected inverter according to claim 3, wherein the switching the grid-connected inverter from the voltage-source mode to the current-source mode comprises:
   gradually releasing the limit on the magnitude of the modulation voltage.

6. The overvoltage suppression method for the grid-connected inverter according to any one of claims 3 to 5, wherein before controlling the grid-connected inverter to operate in the current-source mode or the voltage-source mode when being connected to the power grid, the overvoltage suppression method further comprises:
   determining the modulation voltage of the grid-connected inverter in the current-loop control mode based on acquired information of the grid-connected inverter.

7. The overvoltage suppression method for the grid-connected inverter according to claim 6, wherein the acquired information comprises a direct-current voltage, alternating-current currents, and alternating-current voltages acquired from the grid-connected inverter.

8. The overvoltage suppression method for the grid-connected inverter according to any one of claims 1 to 5, wherein the preset threshold is an upper limit of an allowable range of the voltage at the alternating-current port of the grid-connected inverter under a national standard requirement.

9. The overvoltage suppression method for the grid-connected inverter according to claim 8, wherein the preset threshold is 1.1 times a rated voltage at the alternating-current port of the grid-connected inverter.

10. The overvoltage suppression method for the grid-connected inverter according to any one of claims 1 to 5, wherein the preset reactive current corresponding to the reactive current outputted from the alternating-current port of the grid-connected inverter is calculated according to a national standard requirement, wherein a frequency of the voltage at the alternating-current port of the grid-connected inverter is within a safe frequency range for the power grid.

11. The overvoltage suppression method for the grid-connected inverter according to claim 10, wherein the preset reactive current corresponding to the reactive current outputted from the alternating-current port of the grid-connected inverter is a product of a difference and a reactive power compensation factor, and the difference is obtained by the preset threshold minus the voltage at the alternating-current port of the grid-connected inverter.

12. A grid-connected inverter, comprising:

> an inverter circuit; and
> a controller, wherein
> an alternating-current side of the inverter circuit is connected to a power grid through a filter;
> the inverter circuit is controlled by the controller; and
> the controller is configured to perform the overvoltage suppression method for the grid-connected inverter according to any one of claims 1 to 11.

13. The grid-connected inverter according to claim 12, wherein the controller comprises a processor and a pulse width modulation (PWM) control unit, wherein the processor is configured to perform the overvoltage suppression method and control the inverter circuit through the PWM control unit.

14. The grid-connected inverter according to claim 13, wherein the processor comprises a processing unit, a modulation voltage magnitude limiting unit, and a current-loop control unit, wherein

> the current-loop control unit is configured to determine a modulation voltage of the grid-connected inverter based on acquired information of the grid-connected inverter; and
> the processing unit is configured to determine whether the voltage at the alternating-current port of the grid-connected inverter exceeds a preset threshold, and control the modulation voltage magnitude limiting unit to limit a magnitude of the modulation voltage of the grid-connected inverter.

Start

S101

A voltage at an
alternating-current port exceeds a
preset threshold

No                                                              Yes

S102

Control a grid-connected inverter to
operate in a current-source mode when
being connect to a power grid

S103

Control the grid-connected inverter to
operate in a voltage-source mode when
being connect to a power grid, to enable
a reactive current or a reactive power
outputted from the alternating-current
port of the grid-connected inverter to
respond within a preset duration; and
switch the grid-connected inverter from
the voltage-source mode to the current-
source mode when the reactive current
is greater than or equal to a preset
current or when the reactive power is
greater than or equal to a preset reactive
power

End

**FIG. 1**

$U_m \angle \theta_m$   $iL$   $L$   $U_g \angle 0$

**FIG. 2**

**FIG. 3**

FIG. 4

**FIG. 5**

**FIG. 6**

EP 4 712 287 A1

## INTERNATIONAL SEARCH REPORT

| International application No. |
| --- |
| **PCT/CN2023/094936** |

### A. CLASSIFICATION OF SUBJECT MATTER

H02J3/16(2006.01)i; H02J3/00(2006.01)i

According to International Patent Classification (IPC) or to both national classification and IPC

### B. FIELDS SEARCHED

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 阳光电源股份有限公司, 逆变器, 电流源, 电压源, 检测, 电压, 大于, 无功, invert+, reactive, detect+

### C. DOCUMENTS CONSIDERED TO BE RELEVANT

| Category* | Citation of document, with indication, where appropriate, of the relevant passages | Relevant to claim No. |
| --- | --- | --- |
| Y | CN 113765140 A (NARI TECHNOLOGY CO., LTD. et al.) 07 December 2021 (2021-12-07) description, paragraphs [0065]-[0137], and figure 1 | 1-14 |
| Y | CN 112994120 A (SUNGROW POWER SUPPLY CO., LTD.) 18 June 2021 (2021-06-18) description, paragraphs [0005]-[0038] | 1-14 |
| A | CN 106941257 A (XUCHANG UNIVERSITY) 11 July 2017 (2017-07-11) entire document | 1-14 |
| A | CN 113765160 A (BEIJING SMARTCHIP MICROELECTRONICS TECHNOLOGY CO., LTD. et al.) 07 December 2021 (2021-12-07) entire document | 1-14 |
| A | CN 114865711 A (STATE GRID HUBEI ELECTRIC POWER CO., LTD. ELECTRIC POWER RESEARCH INSTITUTE et al.) 05 August 2022 (2022-08-05) entire document | 1-14 |
| A | US 2011187200 A1 (XANTREX TECHNOLOGY INC.) 04 August 2011 (2011-08-04) entire document | 1-14 |

☐ Further documents are listed in the continuation of Box C.　　☑ See patent family annex.

| | |
| --- | --- |
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | "&"　document member of the same patent family |
| "P"　document published prior to the international filing date but later than the priority date claimed | |

| Date of the actual completion of the international search | Date of mailing of the international search report |
| --- | --- |
| **13 June 2023** | **20 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094936**

| Patent document cited in search report | | | Publication date (day/month/year) | Patent family member(s) | | | Publication date (day/month/year) |
|---|---|---|---|---|---|---|---|
| CN | 113765140 | A | 07 December 2021 | None | | | |
| CN | 112994120 | A | 18 June 2021 | None | | | |
| CN | 106941257 | A | 11 July 2017 | None | | | |
| CN | 113765160 | A | 07 December 2021 | None | | | |
| CN | 114865711 | A | 05 August 2022 | None | | | |
| US | 2011187200 | A1 | 04 August 2011 | AU | 2011213174 | A1 | 30 August 2012 |
| | | | | AU | 2011213174 | B2 | 20 August 2015 |
| | | | | CA | 2788627 | A1 | 11 August 2011 |
| | | | | CA | 2788627 | C | 16 June 2015 |
| | | | | WO | 2011097147 | A2 | 11 August 2011 |
| | | | | WO | 2011097147 | A3 | 26 April 2012 |
| | | | | EP | 2532065 | A2 | 12 December 2012 |
| | | | | US | 8258759 | B2 | 04 September 2012 |
| | | | | BR | 112012019513 | A2 | 13 March 2018 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310519047